# EUROPEAN PATENT SPECIFICATION

(11) **EP 3 789 752 B1**
(45) Date of publication and mention of the grant of the patent: **10.05.2023**
(21) Application number: 19792062.2
(22) Date of filing: 26.04.2019
(51) Int. Cl.: G01N 21/03, B01L 3/00, G01N 1/38

(54) **REACTION VESSEL FOR TESTING**
REAKTIONSGEFÄSS ZUR PRÜFUNG
RÉCIPIENT DE RÉACTION POUR TEST

(30) Priority: 28.04.2018 CN 201810404762; 28.04.2018 CN 201820638336 U
(43) Date of publication of application: 10.03.2021
(73) Proprietor: Guangdong Poctman Life Technology Co., Ltd., Songshan Lake Park Dongguan City Guangdong (CN)
(72) Inventor: LUO, Jincai, Dongguan, Guangdong 523000 (CN); YE, Changqin, Dongguan, Guangdong 523000 (CN)
(74) Representative: Zaboliene, Reda
(86) International application number: PCT/CN2019/084554
(87) International publication number: WO 2019/206278

(56) References cited:
- WO-A1-2005/049207
- CN-A- 108 489 904
- CN-U- 202 453 285
- CN-U- 202 956 335
- CN-U- 205 080 061
- CN-U- 208 297 330
- US-A- 5 658 531
- US-A- 5 869 328

## Description

### FIELD OF THE INVENTION

The present invention relates to the technical field of analysis and testing, and more particularly to a reaction vessel for testing.

### BACKGROUND OF THE INVENTION

As science and technology advance continuously, there are two main development trends for detection and analysis equipment. One of the trends is to develop "high-precision integrated devices" that rely on large fully automatic equipment and have the advantages of fast batch detection and accurate result and the disadvantages of high instrument cost, complex operation, and long single sample reporting time; and the other one of the trends is to develop "simple, fast, and convenient devices" with the features of miniaturized instruments, simple operation, and quick report. Although its batch processing capacity is not as good as the large-scale fully-automatic instruments, this trend has the advantages of low instrument cost, simple sample processing, and it is suitable for quick on-site testing.

In the fields of medical diagnosis, environmental monitoring, and food and drug safety, it is very important to perform fast on-site quantitative tests and analyses on biomedical, immune and other detection indicators. In these fields, a traditional method uses spectrophotometer for the detection and has the disadvantages of cumbersome operation, low efficiency, poor repeatability, and few detection parameters, and thus fails to meet actual requirements. Later, a semi-automatic biochemical analyzer was developed based on the spectrophotometer, and this analyzer is automated to a certain degree to improve the efficiency, but still cannot meet the actual requirements for the increasing sample size.

At present, a fully automatic biochemical analyzer has been developed, and this analyzer uses a method to complete the procedures of adding samples, adding reagents, mixing, pre-warming, comparing colors (or turbidities), and calculating and reporting results in the immune-biochemical analysis fully or partially automatic instruments, so as to improve the work efficiency and the detection quality significantly. However, the existing automatic biochemical analyzers are bulky, expensive, and complicated to operate, and they also need to be equipped with professional devices for sample pre-treatment, so that they can only be used in central laboratories of large hospitals and operated by trained professionals. Obvious, the aforementioned method cannot meet the requirements for quick on-site testing.

In the field of quick on-site testing, a microfluidic technology has emerged, and this technology integrates the functions of sampling, adding reagents, mixing, preserving heat, and comparing colors required for the detection by the biochemical analyzer into a microchip, but this technology has the drawbacks that it can only detect several indicators at a time, but cannot detect each single indicator separately, and the accuracy of detection results of this technology is poor.

In other quick on-site testing equipment, the fully automatic biochemical analyzer is miniaturized, but the procedures including the automatic sampling, needle washing, mixing, cup washing, etc. are still required, so that such equipment is only suitable for small laboratories, but cannot meet the requirements for quick on-site diagnosis.

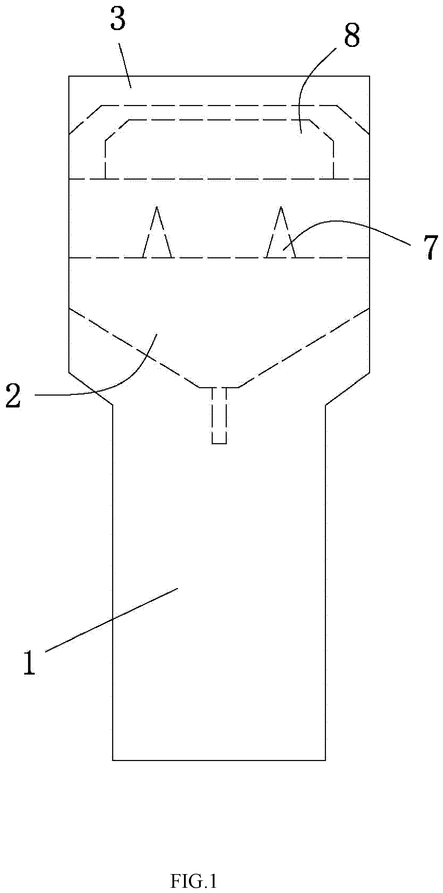

Patent document US 5658531 A discloses an assay device for assaying for nicotine metabolites in samples of urine for the purpose of checking on recent smoking habit. The assay device illustrated therein comprises an open-topped elongated cylindrical body having a reaction chamber; a sample collector/dispenser having a sample collection chamber closed by an elastic membrane. The reaction chamber contains solid assay reagents and is closed at its top by a pierceable membrane. The collector/dispenser further includes a downwardly projecting sampling and piercing tube which opens into the chamber through lateral apertures in a hollow volume-determining stop. A chamber is defined between the two membranes and for a further reagent which is to be kept separate from the reagent(s) illustrated and described above in relation to FIG. 1a. When the membrane is ruptured by piercing tube of collector/dispenser, the reagent is mixed with the reagent(s) and with the sample being assayed which is dispensed through the piercing tube.

Patent document US 5869328 A discloses a cuvette for performing a diagnostic test on a specimen. The cuvette includes a base defining a first chamber for receiving a reagent, and a second chamber for receiving a specimen. The second chamber is defined by four side surfaces forming a rectangular cross-sectional configuration, and a base surface extending between the side surfaces. The base surface is defined by a frangible wall in order to permit the second chamber containing the specimen to be placed in fluid communication with the first chamber containing the reagent in order to mix the specimen and reagent. A cover is coupled to the base and is movable between a first or open position spaced away from the second chamber for permitting introduction of the specimen into the second chamber, and a second or closed position overlying and enclosing the second chamber. As the cover is moved into the closed position, the tip of the piercing member engages the base surface of the second chamber, and in turn pierces the frangible wall to thereby allow the test specimen to be mixed with the reagent in the first chamber.

Patent document WO 2005/049207 A1 discloses a mixing container used for reagents. The mixing container includes a first container and a second container. The first container is a container that stores two or more reagents, and includes reagent storage chambers respectively provided for the reagents, and a sealing member.

### SUMMARY OF THE INVENTION

In view of the aforementioned drawbacks and deficiencies of the prior art, the present invention provides a reaction vessel for quick on-site testing with low cost, reliable result, simple operation, quick reporting, and miniaturized instrument suitable for bedside testing.

To achieve the aforementioned and other objectives, the present invention discloses a reaction vessel for testing according to claim 1. Further embodiments are defined by the dependent claims.

The present invention has the following advantageous effects: During the process of using the reaction vessel, when only one reagent is required for the testing, the prepared first reagent is put into the first cavity, and the prepared test sample is put in the collection portion, and then the sample holder is packaged into the reaction cup or the cover, and the cover is covered, and the first reagent contained in the first cavity and the test sample contained in the collection portion are mixed together. When two reagents is required for the testing, the prepared first reagent is put into the first cavity, and the prepared second reagent is put into the packaging bag, and the prepared test sample is contained in the collection portion, and then the sample holder is packaged into the reaction cup or the cover, and the cover is covered, and the first reagent contained in the first cavity and the test sample contained in the collection portion are mixed together, and then an external force is applied when needed to puncture the packaging bag by the piercing member, so that the second reagent contained in the packaging bag is mixed with the mixture of the first reagent and the test sample. The reaction vessel has the features of simple structure and convenient use, so that the reagent used for the testing can be prepared in advance and released according to the required time and sequence, and the procedures of adding the reagent, washing the needle, and washing the cup can be skipped, so that the instrument for operating the reaction vessel does not require the devices and procedure for adding the sample, needle, reagent, liquid path, and washing, etc., so as to simplify the structure of the instrument significantly, and miniaturize the instrument to lower achieve the effects of lowering the cost, improving the reliability, and simplifying the operation. The reaction vessel of the present invention is suitable for quick on-site testing.

### BRIEF DESCRIPTION OF THE DRAWINGS

FIG. 1 is a schematic structural view of the present invention;
FIG. 2 is a cross-sectional view of a reaction cup and a sealing ring of the present invention;
FIG. 3 is a cross-sectional view of a sample holder of the present invention;
FIG. 4 is a cross-sectional view of a packaging bag of the present invention;
FIG. 5 is a cross-sectional view of a piercing member of the present invention; and
FIG. 6 is a cross-sectional view of a cover of the present invention.

### Brief Description of Numerals Used in the Drawings:

1: Reaction cup; 2: Sample holder; 3: Cover; 4: First cavity; 5: Collection portion; 6: Capillary pore; 7: Piercing member; 8: Packaging bag; 9: Second cavity; 11: Diaphragm; 12: Supporting portion; 121: Limiting portion; 13: Tapered portion; 14: Liquid passing hole; 15: Cover plate; 16: Piercing portion; 17: Through hole; 18: Outer cap; 19: Inner cap; 21: Groove; 22: Engaging slot; 23: Engaging block; 24: Sealing ring; and 25: Circular blind slot.

### DESCRIPTION OF THE PREFERRED EMBODIMENTS

To make it easier for our examiner and people having ordinary skill in the art to understand the objective of the invention, its structure, innovative features, and performance, we use preferred embodiments together with the attached drawings for the detailed description of the invention. It is intended that the embodiments and figures disclosed herein are to be considered illustrative rather than restrictive.

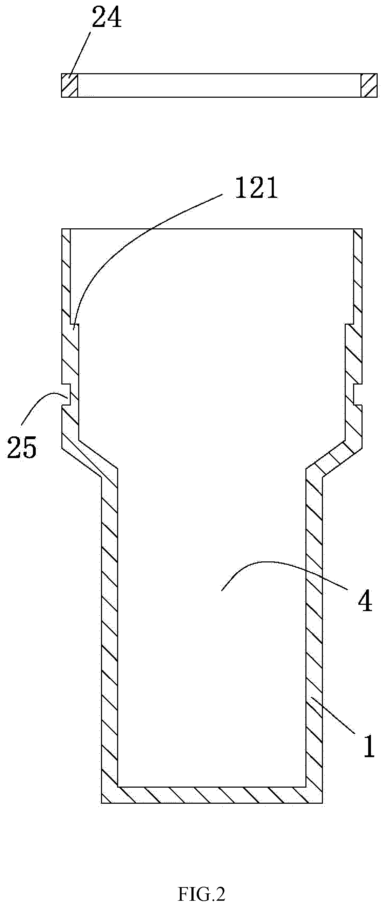

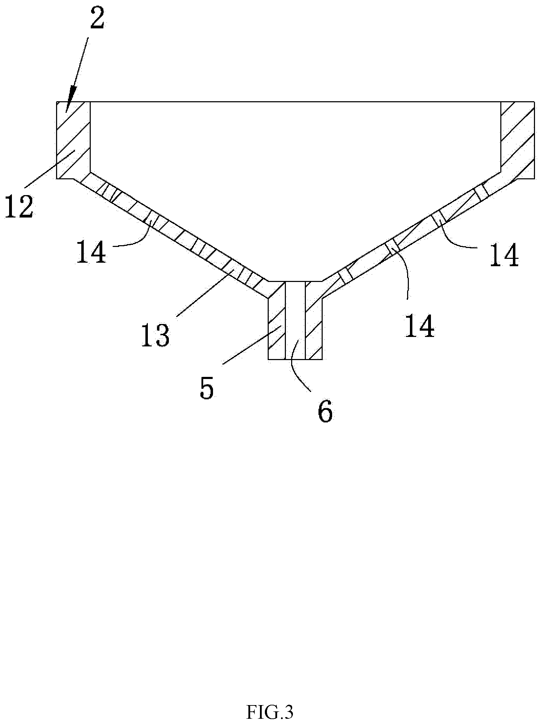

With reference to FIGS. 1 to 3 for a reaction vessel for testing in accordance with the present invention, the reaction vessel comprises a reaction cup 1, a sample holder 2 and a cover 3, characterized in that the sample holder 2 is accommodated in the reaction cup 1 or the cover 3; the reaction cup 1 is a substantially hollow structure having a first cavity 4 for receiving an external first reagent, and the first cavity 4 is concavely formed on an end surface of the reaction cup 1; the sample holder 2 has a collection portion 5 for receiving an external test sample, and the collection portion 5 is exposed from the first cavity 4; the cover 3 is for covering an opening of the first cavity 4, and a first reagent contained in the first cavity 4 is mixed with a test sample contained in the collection portion 5.

In the process of using the reaction vessel, when only one reagent is required for the testing, the prepared first reagent in a liquid state is put into the first cavity 4, and then the reaction cup 1 and the cover 3 are assembled together and packaged independently, and the first reagent is sealed tightly in the first cavity 4, and the sample holder 2 is packaged individually. When it is necessary to analyze and test the test sample, the reaction cup 1 and the cover 3 are opened, and a sample collection device for testing a sample is added into an empty blind slot of the sample holder 2 or a capillary pore 6 of the sample holder 2 is used to draw a fixed quantity of the test sample, and then the sample holder 2 is packaged into the reaction cup 1 or the cover 3, and then the reaction cup 1 and the cover 3 are assembled tightly together, and finally the reaction vessel is turned upside down at a controlled time point to mix the first reagent contained in the first cavity 4 with the test sample contained in the collection portion 5.

When two reagents are required for the testing, the prepared first reagent in a liquid state is put into the first cavity 4, and the required second reagent is prepared in advance and packaged into a packaging bag 8, and the packaging bag 8 is contained in the reaction cup 1 and/or the cover 3, and then the reaction cup 1 and the cover 3 are assembled together and packaged independently, and the first reagent is tightly packaged into the first cavity 4, and the second reagent is tightly packaged into the packaging bag 8. The sample holder 2 is packaged individually. When it is necessary to analyze and test the test sample, the reaction cup 1 and the cover 3 are opened, and then an sampling device for testing is added into an empty blind slot of the sample holder 2 or a test sample is sucked and obtained by the capillary pore 6 of the sample holder 2, and then the sample holder 2 is packaged into the reaction cup 1 or the cover 3, and then the reaction cup 1 and the cover 3 are assembled tightly together again. Therefore, the reaction vessel can be turned upside down at a controlled time point in order to mix the first reagent contained in the first cavity 4 with the test sample contained in the collection portion 5, and then the packaging bag 8 can be pressed at a controlled time point or the inner cap 19 can be displaced to drive the piercing member 16 to pierce the diaphragm 11 of the packaging bag 8, and the reaction vessel can be turned upside down to mix the mixture of the first reagent and the test sample with the second reagent contained in the packaging bag 8.

The reaction vessel has the features of simple structure and convenient use, and it is not just suitable for a single reagent testing only, but also suitable for a double reagent testing. More importantly, the reagent required for the testing can be prepared in advance and released according to the required time and sequence. In addition, the reaction vessel skips the procedure of adding the reagent, washing the needle, and washing the cup and omits the devices and procedures such as adding the sample needle, the reagent needle, the liquid path, and the washing step, so as to achieve the effects of simplifying the structure of the instrument significantly, miniaturizing the instrument, lowering the cost, improving the reliability, and simplifying the operating. This reaction vessel is suitable for quick on-site testing.

The reaction cup 1 has a limiting portion 121 extending into the first cavity 4, and the sample holder 2 has a supporting portion 12 for abutting against the limiting portion 121, and the supporting portion 12 is clamped between the limiting portion 121a and the cover 3. During the process of installing the sample holder 2 into the reaction cup 1, and after the sample holder 2 is installed at a predetermined position, the limiting portion 121 will block the supporting portion 12 of the sample holder 2 to prevent the sample holder 2 from being overfilled. Preferably, the limiting portion 121 is in a circular shape, so that the limiting portion 121 can block the sample holder 2 regardless of the angle for installing the sample holder 2 into the reaction cup 1.

In this embodiment, the sample holder 2 further comprises a tapered portion 13 coupled to the supporting portion 12, and the collection portion 5 is coupled to an end of the tapered portion 13 away from the supporting portion 12, and the supporting portion 12, the tapered portion 13 and the collection portion 5 are an integrally formed structure.

The collection portion 5 is disposed at the capillary pore 6 of the sample holder 2, and the capillary pore 6 is communicated with the first cavity 4 and provided for receiving an external test sample, and a liquid passing hole 14 is formed at an upper end of the sample holder 2 and penetrated through a sidewall of the sample holder 2. When use, the collection portion 5 is inserted into the external test sample, and the test sample will enter into the capillary pore 6 automatically under the effect of capillary phenomenon. When it is necessary to mix the first reagent with the test sample, the reaction vessel is turned upside down, so that the first reagent in contacted and mixed with the test sample. When the reaction vessel is upright, the first reagent contained in the first cavity 4 is not in contact with the test sample contained in the collection portion 5 of the sample holder 2. When the reaction vessel is turned upside down, the first reagent contained in the first cavity 4 is contacted and mixed with the test sample contained in the collection portion 5 of the sample holder 2.

The collection portion 5 is disposed in an accommodating blind slot (not shown in the figure) of the sample holder 2, and the accommodating blind slot is formed at a lower end of the sample holder 2, and the liquid passing hole 14 penetrates through a sidewall of the sample holder 2, and the liquid passing hole 14 is communicated with the accommodating blind slot and the first cavity 4, and the first reagent contained in the first cavity 4 is situated below the liquid passing hole 14. After the test sample is put into the accommodating blind slot of the sample holder 2 and if it is necessary to mix the first reagent and test sample, the reaction vessel is turned upside down, so that the collection portion 5 is submerged into the first reagent, and the first reagent and the test sample are mixed with each other through the liquid passing hole 14. In other words, when the reaction vessel is upright, the first reagent contained in the first cavity 4 is not in contact with the test sample contained in the collection portion 5 of the sample holder 2; when the reaction vessel is upside down, the first reagent contained in the first cavity 4 is contacted and mixed with the test sample contained in the collection portion 5 of the sample holder 2.

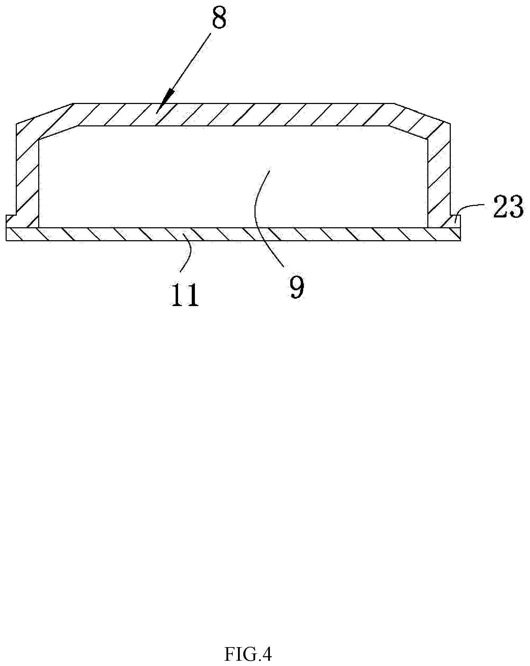

In FIG. 1 to 4, the reaction vessel for testing further comprises a piercing member 7 and a packaging bag 8, and both of the piercing member 7 and the packaging bag 8 are accommodated in the reaction cup 1 and/or the cover 3, and the packaging bag 8 has a second cavity 9 for receiving an external second reagent and a diaphragm 11 for sealing an opening of the second cavity 9 of the cover 3, and the piercing member 7 is provided for piercing the diaphragm 11 in order to mix the mixture of the first reagent and the test sample with the second reagent, so that the test sample can be mixed with the two reagents sequentially for testing. According to actual requirements, the diaphragm 11 can be a plastic sheet or an aluminum foil sheet.

Both of the piercing member 7 and the packaging bag 8 are installed in the cover 3, and a gap is formed between the piercing member 7 and the packaging bag 8, and the cover 3 is made of a soft material such as silicone. When it is necessary to mix the second reagent with the mixture of the first reagent and the test sample, the cover 3 is squeezed and pressed to deform, and the deformed cover 3 together with the packaging bag 8 moves in a direction towards the piercing member 7, until the piercing member 7 pierces the diaphragm 11, and then the second reagent contained in the packaging bag 8 can be released and mixed with the first reagent and the test sample contained in the first cavity 4.

The piercing member 7 is installed in the reaction cup 1, and the packaging bag 8 is installed in the cover 3, and the cover 3 is movably installed to the reaction cup 1. For example, the cover 3 is screwed to the reaction cup 1, and when it is necessary to mix the second reagent with the mixture of the first reagent and the test sample, the cover 2 is held and turned, so that the cover 3 is moved relative to the reaction cup 1, and the moving reaction cup 1 drives the packaging bag 8 to move together, until the piercing member 7 pierces the diaphragm 11, and then the second reagent contained in the packaging bag 8 can be released and mixed with the first reagent and the test sample contained in the first cavity 4. According to actual requirements, the cover 3 can be slidably installed to the reaction cup 1.

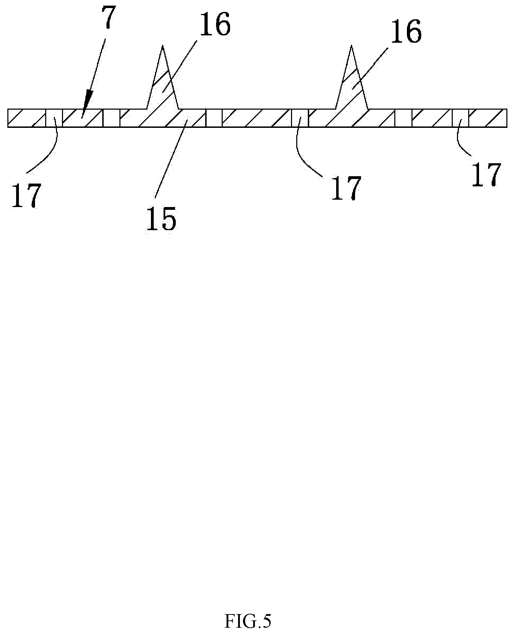

With reference to FIGS. 1 to 5, the piercing member 7 has a cover plate 15 and a piercing portion 16 protruded from the cover plate 15, and the cover plate 15 is a substantially flat sheet, and the piercing portion 16 is upwardly protruded from the cover plate 15, and the cover plate 15 and the piercing portion 16 are an integrally formed structure, and the cover plate 15 has a through hole 17 penetrating through the cover plate 15, and the cover plate 15 is disposed between the sample holder 2 and the packaging bag 8, and the piercing portion 16 is provided for piercing the diaphragm 11. Preferably, the piercing member 7 is in a conical shape. According to actual requirements, the piercing portion 16 can be in a pyramidal shape or a conical shape. An end of the piercing portion 16 away from the cover plate 15 has an outer diameter smaller than the outer diameter of an end of the piercing portion 16 closed to the cover plate 15, in order to make sure that the piercing portion 16 can conveniently pierce the diaphragm 11 of the packaging bag 8. After the piercing portion 16 has pierced the diaphragm 11, the second reagent contained in the packaging bag 8 can be released through the through hole 17 and combined with the first reagent and the test sample contained in the first cavity 4.

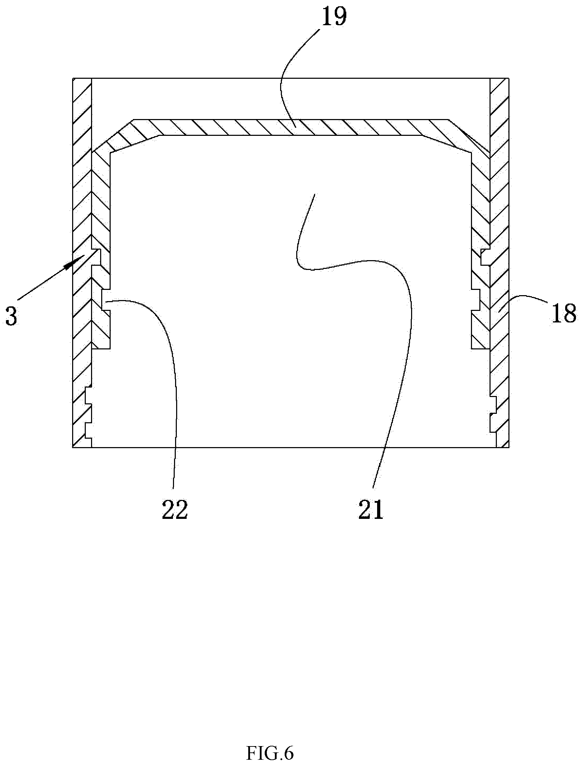

With reference to FIGS. 1 to 6, the cover 3 comprises an outer cap 18 and an inner cap 19 installed in the outer cap 18, and the outer cap 18 is detachably coupled to the reaction cup 1, and the inner cap 19 has a groove 21 formed thereon and communicated to the first cavity 4 and an engaging slot 22 communicated to the groove 21, and the groove 21 is concavely formed on a lower surface of the inner cap 19, and the groove 21 does not penetrate through the inner cap 19, and the engaging slot 22 is concavely formed on a sidewall of the groove 21, and the packaging bag 8 is accommodated in the groove 21, and the packaging bag 8 has an engaging block 23 extending into the engaging slot 22, and the engaging block 23 is convexly formed on an outer surface of the packaging bag 8.

After the packaging bag 8 is installed into the inner cap 19, the engaging block 23 is protruded into the engaging slot 22, and a sidewall of the engaging slot 22 abuts against an outer surface of the engaging block 23 to prevent the packaging bag 8 from falling out from the inner cap 19. In actual manufacturing, the engaging slot 22 may not be needed, but an interference fit is designed between the packaging bag 8 and the groove 21, and the friction between the outer surface of the packaging bag 8 and the sidewall of the groove 21 can fix the packaging bag 8 in the inner cap 19. Preferably, the inner cap 19 is made of an elastic material such as silicone, and after the packaging bag 8 is installed into the groove 21, the inner cap 19 has an elastic deformation, and the elastic restoring force of the inner cap 19 is used to fix the packaging bag 8 tightly into the inner cap 19.

The reaction vessel for testing further comprises a sealing ring 24, an outer cap 18 sheathed on an outer side of the reaction cup 1. For example, the outer cap 18 is screwed to the outer side of the reaction cup 1, and the reaction cup 1 has a circular blind slot 25 concavely formed on an outer surface of the reaction cup 1, and the sealing ring 24 is accommodated in the circular blind slot 25 and protruded out from an outer surface of the reaction cup 1 for abutting against an inner sidewall of the outer cap 18, and the sealing ring 24 is for sealing a gap between the cover 3 and the reaction cup 1 to prevent the reagent or test sample contained in the first cavity 4 from leaking out from the gap between the cover 3 and the reaction cup 1. In this embodiment, the sealing ring 24 is made of an elastic material such as silicone.

According to actual requirements, the reaction cup 1 is made of transparent plastic, transparent quartz and transparent glass, and an external detecting light s projected onto a solution contained in the first cavity 4 of the reaction cup 1 to test the solution contained in the first cavity 4 in response to the light absorbance value of the light with a specific wavelength, so as to achieve the testing of a specific object to be tested in the test sample.

In this embodiment, the volume of the first cavity 4 is 0.05~8ml.

While the invention has been described by means of specific embodiments, numerous modifications and variations could be made thereto by those skilled in the art without departing from the scope of the invention as set forth in the claims.

## Claims

1. A reaction vessel for testing, comprising a Reaction cup (1), a Sample holder (2) and a Cover (3), wherein the Sample holder (2) is accommodated in the Reaction cup (1) or the Cover (3); the Reaction cup (1) is made of a transparent material and has a First cavity (4) for receiving an external first reagent; the Sample holder (2) has a Collection portion (5) for receiving an external test sample; the Collection portion (5) is disposed inside and exposed from the First cavity (4); the Cover (3) is provided for covering an opening of the First cavity (4); the First cavity (4) is configured to contain the first reagent for mixing with the test sample contained in the Collection portion (5);
a Liquid passing hole (14) is formed at an upper end of the Sample holder (2) and provided for communicating the Collection portion (5) and the First cavity (4), such that when in use
the reaction vessel is turned upside down, the first reagent contained in the first cavity (4) is contacted and mixed with the test sample contained in the collection portion (5) of the sample holder (2);
the reaction vessel further comprises a Piercing member (7) and a Packaging bag (8), the Piercing member (7) and the Packaging bag (8) being either both accommodated in the cover (3) or accommodated in the Reaction cup (1) and the Cover (3), respectively, and the Packaging bag (8) having a Second cavity (9) for receiving an external second reagent and a Diaphragm (11) for covering an opening of the Second cavity (9), and the Piercing member (7) being provided for piercing the Diaphragm (11), so as to when in use mix the second reagent with the first reagent and the test sample;
the Cover (3) comprises an Outer cap (18) and an Inner cap (19) installed in the Outer cap (18), and the Outer cap (18) is detachably coupled to the Reaction cup (1); the Inner cap (19) is configured to be displaced toward the Piercing member (7), such that when in use the diaphragm (11) is pierced by the Piercing member (7) to mix the second reagent with the first reagent and the test sample.

2. The reaction vessel for testing as claimed in claim 1, wherein the Collection portion (5) is disposed at a Capillary pore (6) of the Sample holder (2), and the Capillary pore (6) is communicated with the First cavity (4) and provided for receiving the external test sample.

3. The reaction vessel for testing as claimed in claim 1, wherein the Collection portion (5) is disposed at an accommodating blind slot of the Sample holder (2), and the accommodating blind slot is disposed at a lower end of the Sample holder (2), and the Liquid passing hole (14) is provided for communicating the accommodating blind slot and the First cavity (4).

4. The reaction vessel for testing as claimed in claim 1, wherein the Piercing member (7) and the Packaging bag (8) are installed in the Cover (3), and a gap is defined between the Piercing member (7) and the Packaging bag (8), and the Cover (3) is made of a soft material.

5. The reaction vessel for testing as claimed in claim 1, wherein the Piercing member (7) is installed to the Reaction cup (1), and the Packaging bag (8) is installed to the Cover (3), and the Cover (3) is movably installed to Reaction cup (1).

6. The reaction vessel for testing as claimed in claim 1, wherein the Piercing member (7) has a Cover (3) plate and a Piercing portion (16) formed and protruded from the Cover (3) plate, and the Cover (3) plate has a Through hole (17) penetrating through the Cover (3) plate, and the Piercing portion (16) is provided for piercing the Diaphragm (11) .

7. The reaction vessel for testing as claimed in claim 1, wherein the Inner cap (19) has a Groove (21) communicated to the First cavity (4), and the Packaging bag (8) is accommodated in the Groove (21).

8. The reaction vessel for testing as claimed in claim 7, further comprising a Sealing ring (24), an Outer cap (18) sheathed on an outer side of the Reaction cup (1), a Circular blind slot (25) concavely formed on an outer surface of the Reaction cup (1), and a Sealing ring (24) accommodated in the Circular blind slot (25) and protruding out from the outer surface of the Reaction cup (1) for abutting against an inner sidewall of the Outer cap (18) .

9. The reaction vessel for testing as claimed in claim 1, wherein the Reaction cup (1) has a Limiting portion (121) protruding into the First cavity (4), and the Sample holder (2) has a Supporting portion (12) for pressing against the Limiting portion (121), and the Supporting portion (12) is clamped between the Limiting portion (121) and the Cover (3).

## Patentansprüche

1. Reaktionsbehälter zum Testen, umfassend einen Reaktionsbecher (1), einen Probenhalter (2) und eine Abdeckung (3), **dadurch gekennzeichnet, dass** der Probenhalter (2) in dem Reaktionsbecher (1) oder der Abdeckung (3) untergebracht ist, wobei der Reaktionsbecher (1) aus einem transparenten Material besteht und einen ersten Hohlraum (4) zum Empfangen eines externen ersten Reagens aufweist, wobei der Probenhalter (2) einen Sammelabschnitt (5) zum Empfangen einer externen Testprobe aufweist, wobei der Sammelabschnitt (5) innerhalb des ersten Hohlraums (4) angeordnet ist und von dem ersten Hohlraum (4) freigelegt ist, wobei die Abdeckung (3) eingerichtet ist, um eine Öffnung des ersten Hohlraums (4) abzudecken, wobei der erste Hohlraum (4) konfiguriert ist, um das erste Reagens zum Mischen mit der Testprobe aufzunehmen, die in dem Sammelabschnitt (5) enthalten ist, wobei ein Flüssigkeitsdurchgangsloch (14) am oberen Ende des Probenhalters (2) ausgebildet ist und eingerichtet ist, den Sammelabschnitt (5) und die erste Kammer (4) zu verbinden, so dass der Reaktionsbehälter bei Verwendung invertiert wird, wobei das erste Reagens, das in dem ersten Hohlraum (4) enthalten ist, in Kontakt mit der Testprobe steht und gemischt wird, die in dem Sammelabschnitt (5) des Probenhalters (2) enthalten ist,
der Reaktionsbehälter ferner ein Durchstechelement (7) und einen Verpackungsbeutel (8) umfasst, wobei das Durchstechelement (7) und der Verpackungsbeutel (8) in der Abdeckung (3) oder jeweils in dem Reaktionsbecher (1) bzw. der Abdeckung (3) untergebracht sind, wobei der Verpackungsbeutel (8) einen zweiten Hohlraum (9) zum Empfangen eines externen zweiten Reagens und eine Membran (11) zum Abdecken einer Öffnung des zweiten Hohlraums (9) aufweist, wobei das Durchstechelement (7) eingerichtet ist, um die Membran (11) zu durchstechen, um das zweite Reagens mit dem ersten Reagens und der Testprobe bei Verwendung zu mischen, wobei die Abdeckung (3) eine äußere Kappe (18) und eine innere Kappe (19) umfasst, die in der äußeren Kappe (18) installiert ist, wobei die äußere Kappe (18) abnehmbar mit dem Reaktionsbecher (1) gekoppelt ist, wobei die innere Kappe (19) konfiguriert ist, um sich in Richtung des Durchstechelements (7) zu verschieben, so dass die Membran (11) bei Verwendung durch das Durchstechelement (7) durchstochen wird, um das zweite Reagens mit dem ersten Reagens und der Testprobe zu mischen.

2. Reaktionsbehälter zum Testen nach Anspruch 1, **dadurch gekennzeichnet, dass** der Sammelabschnitt (5) an einem Kapillarloch (6) des Probenhalters angeordnet ist, wobei das Kapillarloch (6) mit dem ersten Hohlraum (4) in Verbindung steht und eingerichtet ist, die externe Testprobe zu empfangen.

3. Reaktionsbehälter zum Testen nach Anspruch 1, **dadurch gekennzeichnet, dass** der Sammelabschnitt (5) an einem Aufnahmeblindschlitz des Probenhalters (2) angeordnet ist, wobei der Aufnahmeblindschlitz am unteren Ende des Probenhalters (2) angeordnet ist, wobei das Flüssigkeitsdurchgangsloch (14) eingerichtet ist, um den Aufnahmeblindschlitz und den ersten Hohlraum (4) zu verbinden.

4. Reaktionsbehälter zum Testen nach Anspruch 1, **dadurch gekennzeichnet, dass** das Durchstechelement (7) und der Verpackungsbeutel (8) in der Abdeckung (3) installiert sind, wobei ein Spalt zwischen dem Durchstechelement (7) und dem Verpackungsbeutel (8) definiert ist, wobei die Abdeckung (3) aus einem weichen Material besteht.

5. Reaktionsbehälter zum Testen nach Anspruch 1, **dadurch gekennzeichnet, dass** das Durchstechelement (7) an dem Reaktionsbecher (1) installiert ist, wobei der Verpackungsbeutel (8) an der Abdeckung (3) installiert ist, wobei die Abdeckung (3) beweglich an dem Reaktionsbecher (1) installiert ist.

6. Reaktionsbehälter zum Testen nach Anspruch 1, **dadurch gekennzeichnet, dass** das Durchstechelement (7) eine Abdeckung (3) und einen von der Abdeckung (3) ausgebildeten und hervorstehenden Durchstechabschnitt (16) aufweist, wobei die Abdeckung (3) ein Durchgangsloch (17) aufweist, das die Abdeckung (3) durchdringt, wobei der Durchstechabschnitt (16) eingerichtet ist, um die Membran (11) zu durchstechen.

7. Reaktionsbehälter zum Testen nach Anspruch 1, **dadurch gekennzeichnet, dass** die innere Kappe (19) eine Nut (21) aufweist, die mit dem ersten Hohlraum (4) verbunden ist, wobei der Verpackungsbeutel (8) in der Nut (21) untergebracht ist.

8. Reaktionsbehälter zum Testen nach Anspruch 7, **dadurch gekennzeichnet, dass** der Reaktionsbehälter ferner einen Dichtungsring (24), eine äußere Kappe (18), die an der Außenseite des Reaktionsbechers (1) angeordnet ist, und einen Rundblindschlitz (25) aufweist, der konkav auf der äußeren Oberfläche des Reaktionsbechers (1) ausgebildet ist, wobei der Dichtungsring (24) in dem Rundblindschlitz (25) untergebracht ist und von der äußeren Oberfläche des Reaktionsbechers (1) vorsteht, um gegen die innere Seitenwand der äußeren Kappe (18) anzuhalten.

9. Reaktionsbehälter zum Testen nach Anspruch 1, **dadurch gekennzeichnet, dass** der Reaktionsbecher (1) einen in den ersten Hohlraum (4) vorstehenden Begrenzungsabschnitt (121) aufweist, wobei der Probenhalter (2) einen Stützabschnitt (12) zum Andrücken an den Begrenzungsabschnitt (121) aufweist, wobei der Stützabschnitt (12) zwischen dem Begrenzungsabschnitt (121) und der Abdeckung (3) eingeklemmt ist.

## Revendications

1. Cuve de réaction pour essais, comprenant un gobelet à réaction (1), un porte-échantillon (2) et un couvercle (3), **caractérisée en ce que**, le porte-échantillon (2) est logé dans le gobelet à réaction (1) ou le couvercle (3) ; le gobelet à réaction (1) est faite d'un matériau transparent et a une première cavité (4) pour recevoir un premier réactif externe ; le porte-échantillon (2) comporte une portion de collecte (5) destinée à recevoir un échantillon de test externe ; la portion de collecte (5) est disposée à l'intérieur de la première cavité (4) et exposée à partir de celle-ci ; le couvercle (3) est prévu pour couvrir une ouverture de la première cavité (4) ; la première cavité (4) est configurée pour contenir le premier réactif à mélanger avec l'échantillon de test contenu dans la portion de collecte (5) ;
un trou de passage de liquide (14) est formé à une extrémité supérieure du porte-échantillon (2) et est prévu pour faire communiquer la portion de collecte (5) et la première cavité (4), de telle sorte qu'en cours d'utilisation
le récipient de réaction est retourné, le premier réactif contenu dans la première cavité (4) est mis en contact et mélangé avec l'échantillon d'essai contenu dans la portion de collecte (5) du porte-échantillon (2) ;
la cuve de réaction comprend en outre :
un élément de perçage (7) et un sac d'emballage (8), l'élément de perçage (7) et le sac d'emballage (8) étant soit tous deux logés dans le couvercle (3), soit logés dans le gobelet à réaction (1) et le couvercle (3), respectivement,
et le sac d'emballage (8) ayant une seconde cavité (9) pour recevoir un second réactif externe et un diaphragme (11) pour couvrir une ouverture de la seconde cavité (9), et l'élément de perçage (7) étant prévu pour percer le diaphragme (11), de manière à mélanger le second réactif avec le premier réactif et l'échantillon de test lors de l'utilisation ;
le couvercle (3) comprend un capuchon extérieur (18) et un capuchon intérieur (19) installé dans le capuchon extérieur (18) et le capuchon extérieur (18) est couplé de manière amovible au godet de réaction (1) ; le capuchon intérieur (19) est configuré pour être déplacé vers l'élément de perçage (7), de sorte qu'en cours d'utilisation, le diaphragme (11) est percé par l'élément de perçage (7) pour mélanger le second réactif avec le premier réactif et l'échantillon d'essai.

2. Cuve de réaction pour essais selon la revendication 1, **caractérisée en ce que**, la portion de collecte (5) est disposée au niveau d'un pore capillaire (6) du porte-échantillon (2), et le pore capillaire (6) est en communication avec la première cavité (4) et prévu pour recevoir l'échantillon d'essai externe.

3. Cuve de réaction pour essais selon la revendication 1, **caractérisée en ce que**, la portion de collecte (5) est disposée au niveau d'une fente aveugle de logement du porte-échantillon (2), et la fente aveugle de logement est disposée à une extrémité inférieure du porte-échantillon (2), et le trou de passage de liquide (14) est prévu pour communiquer la fente aveugle de logement et la première cavité (4).

4. Cuve de réaction pour essais selon la revendication 1, **caractérisée en ce que**, l'élément de perçage (7) et le sac d'emballage (8) sont installés dans le couvercle (3), et un espace est défini entre l'élément de perçage (7) et le sac d'emballage (8), et le couvercle (3) est fait d'un matériau souple.

5. Cuve de réaction pour essais selon la revendication 1, **caractérisée en ce que**, l'élément de perçage (7) est installé sur le gobelet à réaction (1), et le sac d'emballage (8) est installé sur le couvercle (3), et le couvercle (3) est installé de manière mobile sur le gobelet à réaction (1).

6. Cuve de réaction pour essais selon la revendication 1, **caractérisée en ce que**, l'élément de perçage (7) a un couvercle (3) et une portion de perçage (16) formée et en saillie du couvercle (3), et le couvercle (3) a un trou traversant (17) pénétrant à travers le couvercle (3), et la portion de perçage (16) est prévue pour percer le diaphragme (11).

7. Cuve de réaction pour essais selon la revendication 1, **caractérisée en ce que**, le couvercle intérieur (19) a une rainure (21) communiquée à la première cavité (4), et le sac d'emballage (8) est logé dans la rainure (21).

8. Cuve de réaction pour essais selon la revendication 1, **caractérisée en ce que**, elle comprend en outre un anneau d'étanchéité (24), un bouchon extérieur (18) gainé sur un côté extérieur du gobelet de réaction (1), une fente aveugle circulaire (25) concavement formée sur une surface extérieure du gobelet de réaction (1), et un anneau d'étanchéité (24) logé dans la fente aveugle circulaire (25) et dépassant de la surface extérieure du gobelet de réaction (1) pour venir en butée contre une paroi intérieure du bouchon extérieur (18).

9. Cuve de réaction pour essais selon la revendication 1, **caractérisée en ce que**, le godet de réaction (1) a une portion de butée (121) faisant saillie dans la première cavité (4), et le porte-échantillon (2) a une portion de support (12) pour appuyer contre la portion de butée (12) et la portion de support (12) pour appuyer contre la portion de butée (12) pour appuyer sur la portion de butée (121), et la portion de support (12) est serrée entre la portion de butée (121) et le couvercle (3).
